# EUROPÄISCHE PATENTSCHRIFT

(11) **EP 0 527 438 B1**
(45) Veröffentlichungstag und Bekanntmachung des Hinweises auf die Patenterteilung: **22.10.1997**
(21) Anmeldenummer: 92113439.1
(22) Anmeldetag: 06.08.1992
(51) Int. Cl.: G06K 19/077, G06K 19/07

(54) **Datenträgerkarte mit eingeklebtem Schaltkreisträger**
Record carrier with adhesively applied circuit carrier
Support de données avec un support de circuit collé à l'intérieur

(30) Priorität: 14.08.1991 DE 9110057 U
(43) Veröffentlichungstag der Anmeldung: 17.02.1993
(73) Patentinhaber: Orga Kartensysteme GmbH, 33104 Paderborn (DE)
(72) Erfinder: Blome, Rainer, W-4790 Paderborn-Elsen (DE)
(74) Vertreter: Hanewinkel, Lorenz, Dipl.-Phys.

(56) Entgegenhaltungen:
- EP-A- 0 197 847
- PATENT ABSTRACTS OF JAPAN, Band 10, Nr. 338 (P-516),1986; & JP - A - 61141089 (TOSHIBA CORP.)
- PATENT ABSTRACTS OF JAPAN, Band 10, Nr. 231 (M-506), 1986; & JP - A - 61064431 (BRIDGESTONE CORP.)
- PATENT ABSTRACTS OF JAPAN, Band 14, Nr. 126 (C-699), 1990; & JP - A - 2001280
- (TERUMO CORP.)

## Beschreibung

Die Erfindung betrifft eine Datenträgerkarte bestehend aus einem Kartenkörper aus einem ersten Kunststoffmaterial, der eine Aussparung mit einem Absatz aufweist, in der eine aus einem zweiten Kunststoffmaterial bestehende Trägerfolie, die einen Schaltkreisbaustein trägt, mit einer Schmelzkleberfolie eingesiegelt ist.

Eine derartige Datenträgerkarte ist aus DE 36 39 630.3 A1 bekannt. Bei dieser wurde in die Ausnehmung eines Kartenkörpers ein Träger mit einem Schaltkreisbauelement mittels eines Heißsiegelklebstoffilmes befestigt, wobei der Heißsiegelfilm bodenseitig in die Ausnehmung eingebracht wurde und der Träger mit dem Schaltkreisbauelement darauf gesiegelt wurde. Da die Trägerfolie aus einem dünnen, hochelastischen und reißfesten Material, z.B. Polyimid, besteht, der Kartenkörper jedoch aus einem festeren spritztechnisch verarbeitbaren Kunststoffmaterial oder dicker Kunststoffolie, z.B. aus Polyvinylchlorid, besteht, ist die Bindefähigkeit einer Schmelzkleberfolie zu den sehr verschiedenen Materialien äußerst beschränkt, da die Haftfähigkeit nicht zu beiden Materialien optimal ausgebildet werden kann.

Weiterhin ist es aus der JP-A-6164431 bekannt, unterschiedliche Kunststoffbahnen schweißtechnisch miteinander zu verbinden, wobei miteinander verbundene Folienbänder, die in ihren Eigenschaften jeweils zu dem zu verbindenden Kunststoffmaterial paßten, in die Schweißzone eingebracht wurden und dort unter Druck bei einer Temperatur eingeschweißt werden, bei denen die Kunststoffbahnen schmelzen. Ein solches Schmelzen ist jedoch für den Chipträger und den Kartenkörper unzulässig.

Weiterhin ist es aus der JP-A-2001280 bekannt, auf zu verbindende Gummiteile unterschiedlicher Klebeigenschaften Folien aufzuschweißen und diese mit einem geeigneten Kleber zu verkleben. Die Herstellung einer solchen Schweiß-Klebverbindung ist relativ aufwendig und erfordert eine erhebliche Bauhöhe.

Es ist Aufgabe der Erfindung, eine verbesserte Verklebung der Trägerfolie in dem Kartenkörper einer Datenträgerkarte zu erbringen, die auch einer Biegebeanspruchung der Karte stand hält.

Die Lösung der Aufgabe besteht darin, daß der Absatz eine angerauhte Oberfläche aufweist und nur dieser mit einer Schmelzklebefolie beklebt ist, die aus zwei flächig miteinander verbundenen Teilklebstoffolien besteht, von denen die erste Teilklebstoffolie einen optimalen Haftwert zu dem ersten Kunststoffmaterial des Kartenkörpers und die zweite Teilklebstoffolie einen optimalen Haftwert zu dem zweiten Kunststoffmaterial der Trägerfolie aufweist, die damit verklebt ist.

Vorteilhafte Ausgestaltungen sind in den Unteransprüchen angegeben.

Die Erfindung läßt sich für die optimale Verklebung der bekannten verschiedensten Werkstoffe, die zur Herstellung der Trägerelemente und der Kartenkörper benutzt werden, durch jeweils die Auswahl optimal an den einzelnen Werkstoff angepaßter Schmelzkleber anwenden. So können insbesondere die häufig für den Träger verwandten Polyimid-, GFK- oder Polyesterfolien und die für den Kartenkörper verwandten Polyvinylchlorid-, ABS- oder Polykarbonatmaterialien durch eine angepaßte Doppelklebstoffolie miteinander verbunden werden.

Die beiden Teilklebstoffolien können jeweils unmittelbar miteinander verbunden sein, indem sie gemeinsam als eine Folie ausgewalzt oder gezogen werden, oder sie können beidseitig einer Übergangsfolie aufgebracht sein. Diese Übergangsfolie ist in ihren Oberflächeneigenschaften so ausgewählt und ist so aktiviert, daß sie zu beiden Klebstoffen eine große Bindungskraft aufweist. Es hat sich gezeigt, daß sehr dünne Klebstoffschichten und eine geeignet gewählte, sehr dünne Übergangs folie bei geeigneter Wahl der Eigenschaften zu einer dauerhaften und hochbelastbaren Verbindung führen. Die Dicke der Klebstoffschichten ist dabei im wesentlichen an die Rauhigkeit der jeweils damit zu verklebenden Oberflächen geeignet anzupasssen, so daß der Klebstoff in dem erhitzten, zähflüssigen Zustand die oberflächlichen Vertiefungen ausfüllt und sich durch die Wärme aktiviert mit der Oberflächenstruktur verbindet.

Die Doppelklebstoffolie läßt sich im übrigen wie eine einfache verarbeiten, und sie kann in ihrer Gesamtdicke dieser entsprechen, da eine Einfachklebstoffolie aus Kompromißgründen wegen ihrer geringen Haftfähigkeit relativ dicker ausgestaltet wird, so daß im Klebstoff ein elastischer Spannungsaugleich stattfindet.

Für eine optimale Haftfähigkeit des Schmelzklebers an dem Kartenträger, der aus Polyvinilchlorid, ABS oder Polykarbonat gespritzt ist, hat es sich als vorteilhaft erwiesen, eine leicht angerauhte Oberfläche vorzusehen, die beispielsweise durch eine Mikrosandstrahlung der Spitzformoberfläche erzeugt wird.

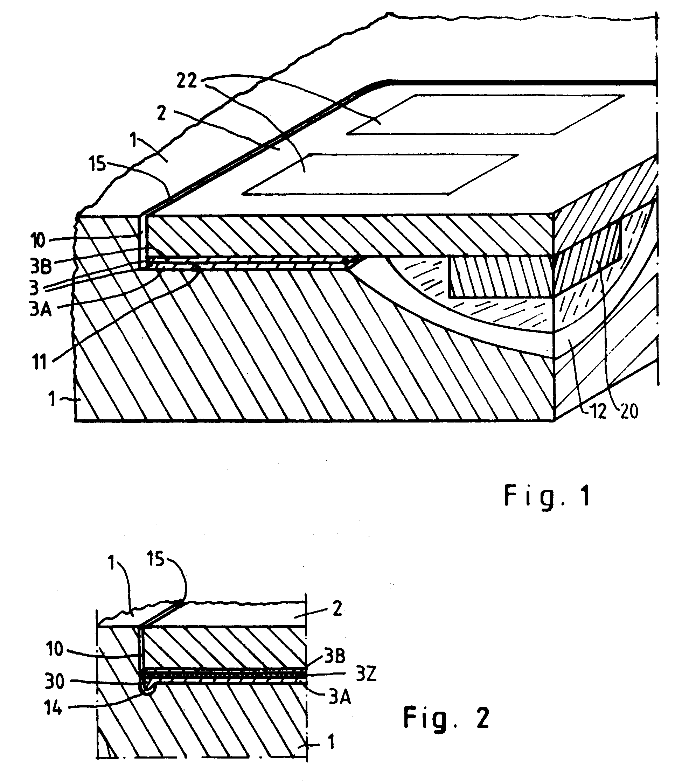

Vorteilhafte Ausgestaltungen sind anhand der Figuren 1 und 2 dargestellt.
- Fig. 1: zeigt einen Querschnitt einer Perspektive ausschnittsweise vergrößert einer Datenträgerkarte mit einer ersten Ausführung der Doppelklebstoffverbindung;
- Fig. 2: zeigt einen Querschnitt einer Perspektive ausschnittsweise vergrößert einer Datenträgerkarte mit einer zweiten Ausführung der Doppelklebstoffverbindung.

In Fig. 1 ist ein gespritzter Kartenkörper (1) dargestellt, der eine Aussparung (10) aufweist, die eine zentrale Vertiefung (12) aufweist. Die Trägerfolie (2), die einen Schaltkreisbaustein (20) trägt, ist in die Aussparung (10) so eingeklebt, daß der Schaltkreisbaustein (20) geschützt in der zentralen Vertiefung (12) liegt. Die Aussparung (10) weist einen stufenförmigen Absatz (11) auf, auf dem eine erste Teilklebstoffolie (3A) der Doppelklebstoffolie (3) aufgesiegelt ist. Eine zweite Teilklebstoffolie (3B) befindest sich unmittelbar auf der ersten, und sie ist vorzugsweise bereits vor ihrer Einbringung in die Aussparung (10) mit dieser fest verbunden. Auf der zweiten Teilklebstoffolie (3B) ist die Trägerfolie (2) aufgesiegt.

Bei dem Heißsiegelvorgang ist die Oberseite des Trägers (2), die die Kontaktflächen (22) des Schaltkreises (20) trägt, bündig mit der Oberfläche des Kartenkörpers (1) verpreßt, wobei ggf. der flüssige Klebstoff, der in geringem Überschuß durch geeignete Dickenwahl der Doppelklebstoffolie (3) bereitsgestellt ist, in eine auf dem Absatz (11) seitlich umlaufende Rille (14) ausweicht. Die sich so in der Rille (14) bildende Klebstoffwulst (30) verhindert es durch ihre größere Elastizität verglichen zu dem engen planen Klebstoffbereich, daß bei einer Biegebelastung der Karte keine hohe Kerbspannung sich an der Grenzfläche zwischen dem Kartenkörper (1) und dem Klebstoff ausbildet, was zusätzliche eine Haltbarkeit der Klebung im Gebrauch der Karte erbringt.

Darüberhinaus wird ein Austreten des Klebstoffes aus dem Passungsspalt (15) vermieden. Die Oberfläche des Absatzes (11) ist mit einer feinen Rauhigkeit versehen, um eine optimale Haftung zu gewähren.

Fig. 2 zeigt eine weitere Ausführung der Klebung zwischen der Trägerfolie (2) und dem Kartenkörper (1). Dabei ist die Doppelklebstoffolie (3) aus den beiden beidseitigen Teilklebstoffolien (3A, 3B) und einer dazwischen liegenden sehr dünnen Übergangsfolie (3Z) gebildet. Diese kann eine Stärke von 5 bis 20 Mikrometer aufweisen, da sie lediglich die Aufgabe hat, zu beiden Klebern einen günstigen Bindewert zu erbringen und die Klebkräfte zwischen den beiden Seiten zu übertragen, was durch eine geeignete Auswahl des Folienkunststoffes leicht zu erreichen ist.

## Patentansprüche

1. Datenträgerkarte bestehend aus einem Kartenkörper (1) aus einem ersten Kunststoffmaterial, der eine Aussparung (10) mit einem Absatz (11) aufweist, in der eine aus einem zweiten Kunststoffmaterial bestehende Trägerfolie (2), die einen Schaltkreisbaustein (20) trägt, mit einer Schmelzkleberfolie (3) eingesiegelt ist,
dadurch gekennzeichnet, daß der Absatz (11) eine angerauhte Oberfläche aufweist und nur dieser mit einer Schmelzklebefolie (3) beklebt ist, die aus zwei flächig miteinander verbundenen Teilklebstoffolien (3A, 3B) besteht, von denen die erste Teilklebstoffolie (3A) einen optimalen Haftwert zu dem ersten Kunststoffmaterial des Kartenkörpers (1) und die zweite Teilklebstoffolie (3B) einen optimalen Haftwert zu dem zweiten Kunststoffmaterial der Trägerfolie (2) aufweist, die damit verklebt ist.

2. Datenträgerkarte nach Anspruch 1, dadurch gekennzeichnet, daß der Kartenkörper (1) aus dem ersten Kunststoffmaterial, nämlich Polyvinylchlorid, ABS oder Polykarbonat, gespritzt ist.

3. Datenträgerkarte nach Anspruch 1 oder 2, dadurch gekennzeichnet, daß die Trägerfolie (2) aus Polyester, GFK oder Polyimid als das zweite Kunststoffmaterial besteht.

4. Datenträgerkarte nach einem der vorstehenden Ansprüche, dadurch gekennzeichnet, daß die Teilklebstoffolie (3A, 3B) eine an die Rauhigkeit der jeweils angrenzenden Oberfläche der beiden Kunststoffmaterialien angepaßte Stärke aufweist.

5. Datenträgerkarte nach einem der vorstehenden Ansprüche, dadurch gekennzeichnet, daß die beiden Teilklebstoffolien (3A, 3B) entweder unmittelbar oder durch eine Übergangsfolie (3Z) miteinander verbunden sind, die zu beiden Teilklebstoffolien (3A, 3B) einen hohen Haftwert aufweist.

6. Datenträgerkarte nach Anspruch 5, dadurch gekennzeichnet, daß die Übergangsfolie (3Z) eine Stärke zwischen 5 und 20 Mikrometern aufweist.

7. Datenträgerkarte nach einem der vorstehenden Ansprüchen, dadurch gekennzeichnet, daß der Absatz (11) randseitig der Schmelzkleberfolie (3) umlaufend eine konkave Rille (14) für eine beim Heißsiegeln entstehende Klebstoffwulst (30) aufweist.

## Revendications

1. Support de données composée d'un corps de carte (1) exécuté dans une première matière plastique et présentant un évidement (10) avec un gradin (11) dans lequel une feuille support (2) de circuit exécutée dans une deuxième matière plastique est thermoscellée à l'aide d'une feuille de collage à fusion (3),
caractérisé en ce que
le gradin (11) présente une surface supérieure rugueuse et que seule celle-ci reçoit une feuille de collage à fusion (3) composée de deux éléments 3A, 3B) reliés ensemble par leur surface, le premier (3A) présentant une valeur adhésive optimale par rapport à la première matière plastique formant le corps de la carte (1), tandis que le deuxième (3B) présente une valeur adhésive optimale par rapport à la matière plastique formant le support de circuit (2).

2. Support de données selon la revendication 1,
caractérisé en ce que
le corps de carte (1) est fait avec une première matière plastique moulée par injection, à savoir: en chlorure de polyvinyle, ABS ou polycarbonate.

3. Support de données selon la revendication 1 ou 2,
caractérisé en ce que
le support (2) de circuit est fait avec une deuxième matière plastique, polyester, matière plastique renforcée aux fibres de verre ou polyimide.

4. Support de données selon l'une des revendications précédentes,
caractérisé en ce que
les deux feuilles adhésives partielles (3A, 3B) présentent une épaisseur adaptée respectivement à la surface adjacente des deux matières plastiques.

5. Support de données selon l'une des revendications précédentes,
caractérisé en ce que
les deux feuilles adhésives partielles (3A, 3B) sont soit reliées directement ensemble soit à l'aide d'une feuille intermédiaire (3Z) qui présente un pouvoir adhésif élevé par rapport aux deux feuilles adhésives partielles (3A, 3B).

6. Support de données selon la revendication 5,
caractérisé en ce que
la feuille intermédiaire (3Z) présente une épaisseur située entre 5 et 20 micromètres.

7. Support de données selon l'une des revendications precédentes,
caractérisé en ce que
le gradin (11) présente une rainure concasve (14) qui s'étend le long du bord de la feuille collante à fusion et est destinée à recevoir le boudin de colle (30) qui se forme lors du thermoscellement.

## Claims

1. Data-carrier card comprising a card body (1) which is made from a first plastic material and has a cavity (10) with an offset (11), in which cavity a carrier foil (2) which consists of a second plastic material and supports a circuit module (20) is sealed in place with a hot-melt adhesive foil (3), characterised in that the offset (11) has a roughened surface and only this offset is pasted over with a hot-melt adhesive foil (3), which consists of two part-adhesive-foils (3A, 3B) joined together in a single plane, of which the first part-adhesive-foil (3A) exhibits an optimal coefficient of adhesion to the first plastic material of the card body (1) and the second part-adhesive-foil (3B) exhibits an optimal coefficient of adhesion to the second plastic material of the carrier foil (2) which is bonded thereto.

2. Data-carrier card according to Claim 1, characterised in that the card body (1) is injection-moulded from the first plastic material, namely polyvinyl chloride, ABS or polycarbonate.

3. Data-carrier card according to Claim 1 or 2, characterised in that the carrier foil (2) consists of polyester, glass-fibre reinforced plastic or polyimide as the second plastic material.

4. Data-carrier card according to one of the preceding claims, characterised in that the part-adhesive foils (3A, 3B) have a thickness matched to the roughness of the respectively adjoining surface of the two plastic materials.

5. Data-carrier card according to one of the preceding claims, characterised in that the two part-adhesive foils (3A, 3B) are either directly joined together or are joined together by a transition foil (3Z) which has a high coefficient of adhesion to both part-adhesive foils (3A, 3B).

6. Data-carrier card according to Claim 5, characterised in that the transition foil (3Z) has a thickness between 5 and 20 micrometres.

7. Data-carrier card according to one of the preceding claims, characterised in that the offset (11) has, running around the border of the hot-melt adhesive foil (3), a concave groove (14) for a bead of adhesive (30) which is obtained during heat-sealing.
